# EUROPÄISCHE PATENTSCHRIFT

(11) **EP 1 395 385 B1**
(45) Veröffentlichungstag und Bekanntmachung des Hinweises auf die Patenterteilung: **15.03.2006**
(21) Anmeldenummer: 02745297.8
(22) Anmeldetag: 16.05.2002
(51) Int. Cl.: B23K 26/04, B23K 26/08

(54) **VERFAHREN UND VORRICHTUNG ZUM ROBOTERGESTEUERTEN SCHNEIDEN VON ZU FÜGENDEN WERKSTÜCKEN MIT LASERSTRAHLUNG**
METHOD AND DEVICE FOR THE ROBOT-CONTROLLED CUTTING OF WORKPIECES TO BE ASSEMBLED BY MEANS OF LASER RADIATION
PROCEDE ET DISPOSITIF POUR LA DECOUPE COMMANDEE PAR ROBOT DE PIECES A ASSEMBLER PAR RAYONNEMENT LASER

(30) Priorität: 01.06.2001 DE 10126871
(43) Veröffentlichungstag der Anmeldung: 10.03.2004
(73) Patentinhaber: ThyssenKrupp Steel AG, 47166 Duisburg (DE); Reis GmbH & Co. Maschinenfabrik, 63785 Obernburg (DE)
(72) Erfinder: NEUMANN, Günter, 52066 Aachen (DE); BEHR, Friedrich, 52072 Aachen (DE); FISCHER, Axel, 63785 Obernburg (DE); KROTH, Eberhard, 63785 Obernburg (DE); SEILER, Stefan, 63785 Obernburg (DE); SOM, Franz, 64750 Lützelbach (DE); MAISCH, Rolf, P., CH-8113 Boppelsen (CH); ZESCH, Wolfgang, CH-8047 Zürich (CH)
(74) Vertreter: Draudt, Axel Hermann Christian
(86) Internationale Anmeldenummer: PCT/EP2002/005371
(87) Internationale Veröffentlichungsnummer: WO 2002/098597

(56) Entgegenhaltungen:
- EP-A- 0 901 875
- DE-A- 2 217 373
- US-A- 4 411 410
- PATENT ABSTRACTS OF JAPAN vol. 1997, no. 10, 31. Oktober 1997 (1997-10-31) & JP 09 164494 A (AMADA CO LTD), 24. Juni 1997 (1997-06-24)
- PATENT ABSTRACTS OF JAPAN vol. 014, no. 351 (M-1003), 30. Juli 1990 (1990-07-30) & JP 02 121790 A (SHINKO KOGYO CO LTD), 9. Mai 1990 (1990-05-09)
- PATENT ABSTRACTS OF JAPAN vol. 1998, no. 01, 30. Januar 1998 (1998-01-30) & JP 09 248683 A (AMADA CO LTD), 22. September 1997 (1997-09-22)

## Beschreibung

Die Erfindung bezieht sich auf ein Verfahren mit den Merkmalen des Oberbegriffs des Anspruchs 1 und eine Vorrichtung mit den Merkmalen des Oberbegriffs des Anspruchs 17.

Ein solches Verfahren ist allgemein bekannt. Es wird üblicherweise mit Knickarmrobotern durchgeführt, die aufgrund ihrer geringen Einstellfrequenz aller Achsen von ca. 10 Hz erhebliche Ungenauigkeiten beim Schneiden und Schweißen aufweisen. Hinzu kommen Ungenauigkeiten aufgrund der mechanischen Herstellung der Roboterbauteile, der eingesetzen Encoder sowie infolge ihres maschineninternen Koordinatensystems, das von einem idealen Koordinatensystem abweicht. Hinzu kommen auch dynamisch bedingte Ungenauigkeiten der Fokuspunktlage. Bei ca. 5m/min. wird je nach Getriebeausführung und Menge der Teachpunkte eine Bahnwiederholgenauigkeit von nur ca. ± 0,1 bis ± 0,4 mm in jeder der drei Koordinatenrichtungen erreicht. Als Genauigkeitsbereich ergibt sich ± 0,1 x Blechdicke. Nötig wäre es aber, das Schneiden von Blechen mit Hilfe eines Roboters auf eine Genauigkeit von ± 0,05 x Blechdicke zu bringen, um beim Schweißen ohne Schweißzusatz einen Nahteinfall zu vermeiden. Außerdem sind Radien von unter 50 mm mit dem bekannten Verfahren nicht zu schweißen, weil die Roboter-Steuerungskorrektur zu langsam ist.

Darüber hinaus ist es bekannt (EP 90 18 75 A1), einen Laserstrahl mit Hilfe eines oder mehrerer bewegter Spiegel an einer Roboterhand so zu steuern, daß diese Roboterhand während der Bearbeitung in einer vorbestimmten Position gehalten wird. Der Fokus ist dann im Vergleich zur Robotersteuerung mit erhöhter Genauigkeit auf dem Werkstück zu positionieren. Die dabei erreichbaren Bearbeitungsweiten von ca. 50 mm sind jedoch insbesondere zur Herstellung von Rohr-Rahmen-Strukturen im Fahrzeugbau völlig unzureichend.

Der Erfindung liegt die Aufgabe zugrunde, ein Verfahren mit den eingangs genannten Verfahrensschritten zu schaffen, das es erlaubt, mit einem einzigen Roboter die Blechkanten im Bereich von ± 0,05 x Blechdicke als Bahnwiederholgenauigkeit zu schneiden, so daß anschließend problemlos verschweißt werden kann, insbesondere ohne Nahteinfall. Die Kontur soll dabei auch sehr kleine Radien von weniger als 50 mm bis hin zu scharfkantigen Ecken aufweisen können.

Die vorgenannte Aufgabe wird durch die Merkmale des Kennzeichenteils des Anspruchs 1 und die Merkmale des Kennzeichenteils des Anspruchs 17 gelöst.

Für das Verfahren wird davon ausgegangen, daß die zu fügenden Werkstücke nach dem Schneiden zumindest des ersten Werkstücks in einer bestimmten Richtung zusammenbaut werden und in dieser Richtung auch passen müssen. Für das Verfahren ist es daher von Bedeutung, daß die Richtung des Zusammenbaus der beiden Werkstücke Basis dafür sein muß, das Schneiden des ersten Werkstücks konturgenau durchzuführen. An jeder Stelle der Schneidkontur des ersten Werkstücks wird daher der Abstand des Fokuspunkts vom zweiten Werkstück bei gleich gerichteter Abstandsrichtung ermittelt, die auf die Richtung des Zusammenbaus der beiden Werkstücke abgestimmt ist, und die Lage eines Bearbeitungspunkts auf dem ersten Werkstück wird so gesteuert, daß sein Abstand vom zweiten Werkstück während des Schneidens konstant gehalten wird. Damit kann insbesondere im Fall von Knickarmrobotern eine genügend genaue Referenz für dessen Steuerung bzw. für die Steuerung des Laserschneidstrahls erreicht werden. Ein Knickarmroboter könnte zwar mit einem Sondergetriebe Bahngenauigkeiten mit 0,4 mm Abweichung in allen drei Koordinatenrichtungen bei einer Entfernung des Fokuspunkts von der ersten Drehachse von ca. 1000 mm erreichen. Das entspricht aber einem Winkelbereich in einer Anstellrichtung von nur ± 0,023 Winkelgrad, welche als Bezugsmaß dient für z bzw. g.

Bei einem Verfahren mit den Verfahrensschritten gemäß dem Kennzeichenteil des Anspruchs 1 können Bahnungenauigkeiten des Roboters und auch Werkstückungenauigkeiten gleichzeitig ausgeglichen werden. Es könnten dreidimensionale Konturschnitte hergestellt werden und zwar inklusive eines Fasenwinkels, der vor allem in Sattelbereichen der Krümmung des zweiten Werkstücks entspricht, um so ein verbessertes Fügen zu erreichen. Das Fügen kann durch Schweißen, Löten, Verschmelzen oder Aushärtungskleben erfolgen. Insbesondere ist aber ein Schweißen möglich, bei dem Nahteinfall vermieden wird. In Nahtbereichen außerhalb eines Sattelbereichs steht beim Schweißen durch Abschmelzung der Schnittkante immer Werkstoff zur Verfügung, so daß hier nicht so genau vorbereitet werden muß, wie im Sattelbereich. Mit dem Verfahren läßt sich ein Schnitt im ersten Werkstück erreichen, dessen Fugenbreite maximal 0,1 x Blechdicke sein soll. Die in diesem Rahmen auftretenden Ungenauigkeiten können dadurch außer Wirkung auf die Nahtausbildung gehalten werden, daß die Bauteile beim Fügen aneinander gepreßt werden, so daß durch elastische Formung eine noch paßgenauere Positionierung ermöglicht wird.

Des weiteren ist es von Bedeutung, das Verfahren so durchzuführen, daß beim Schneiden der Kontur des ersten Werkstücks zusätzlich zur Abstandsermittlung des Fokuspunktes vom zweiten Werkstück eine wiederholte Messung eines Abstands eines Elements einer Bearbeitungsoptik vom ersten Werkstück erfolgt, und daß dieser Abstand während des Schneidens konstant gehalten wird. Infolgedessen führt jede Änderung des Abstands des Fokuspunkts vom ersten Werkstück zu einer Ausregelung dieses Abstands im Sinne eines Konstanthaltens. Zeitgleich damit wird aber auch der Abstand des Fokuspunkts vom zweiten Werkstück fortlaufend überwacht und der Abstand eines Bearbeitungspunkts konstant gehalten, so daß eine Änderung des Abstands des Fokuspunkts vom ersten Werkstück nicht zu einer Kontur des ersten Werkstücks führt, die beim Zusammenbau beider Werkstücke nicht zum zweiten Werkstück paßt.

Es ist vorteilhaft, das Verfahren so durchzuführen, daß der Abstand des Fokuspunkts vom zweiten Werkstück direkt gemessen wird, und daß der konstante Abstand eines dem Fokuspunkt entsprechenden Bearbeitungspunkts bedarfsweise unter Berücksichtigung der Krümmung des ersten Werkstücks und/oder des zweiten Werkstücks eingestellt wird. Die Abstandsermittlung erfolgt dabei durch direktes Messen. Es können bewährte Meßverfahren eingesetzt werden, mit denen die gewünschte Genauigkeit zu erreichen ist. Beispielsweise könnten kapazitive Sensoren eingesetzt werden. Diese weisen aber Fehler auf, wenn sie nicht senkrecht auf die Werkstückoberfläche weisen. Sie müßten daher mit einer Korrekturtabelle angewendet werden, um so einen korrekten Abstand zu messen. Es ist daher vorteilhafter, den Abstand eines dem Fokuspunkt nachfolgenden Bearbeitungspunkts so einzustellen, daß dabei die effektiv vorhandene Krümmung des ersten und/oder des zweiten Werkstücks berücksichtigt wird.

Es kann so verfahren werden, daß der Abstand eines Elements einer Bearbeitungsoptik vom ersten Werkstück mit mindestens einem berührungslosen Sensor in einer Anstellrichtung eines Laserstrahls gemessen wird und/oder daß der Abstand des Fokuspunkts vom zweiten Werkstück mit mindestens einem berührungslosen Sensor gemessen wird. Das direkte Messen mit berührungslosen Sensoren vermeidet alle Nachteile, die sich beim berührungsbehafteten Messen ergeben könnten. Das berührungslose Messen eignet sich insbesondere auch für dünne Werkstücke, bei denen durch berührungsbehaftetes Messen verformungsbedingte Meßfehler zu erwarten sind.

Andererseits hat das berührungsbehaftete Messen auch Vorteile, beispielsweise kann eine Ermittlung von Abständen unabhängig von Krümmungen der Werkstücke erfolgen. Es kann daher vorteilhaft sein, das Verfahren so durchzuführen, daß die Abstände des Fokuspunkts vom zweiten Werkstück und/oder eines Elements einer Bearbeitungsoptik vom ersten Werkstück jeweils mit einem Taster- oder Rollen-Sensor gemessen werden. Berührungsbehaftete Sensoren benötigen jedoch in Meßrichtung eine Längserstreckung und sind wegen der aufzubringenden Anpreßkräfte nur bei Werkstücken mit großen Wanddicken anzuwenden.

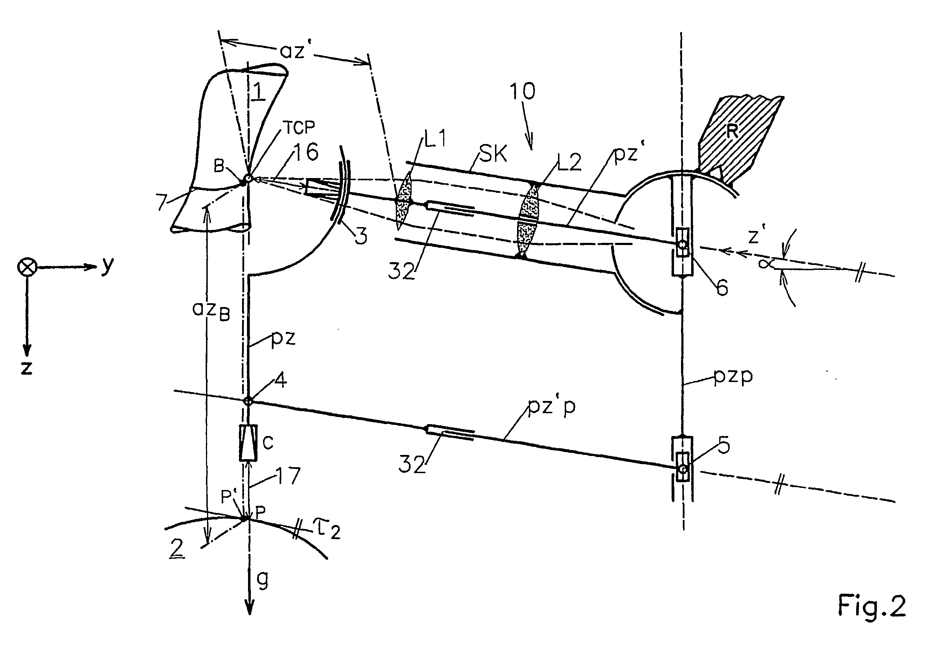

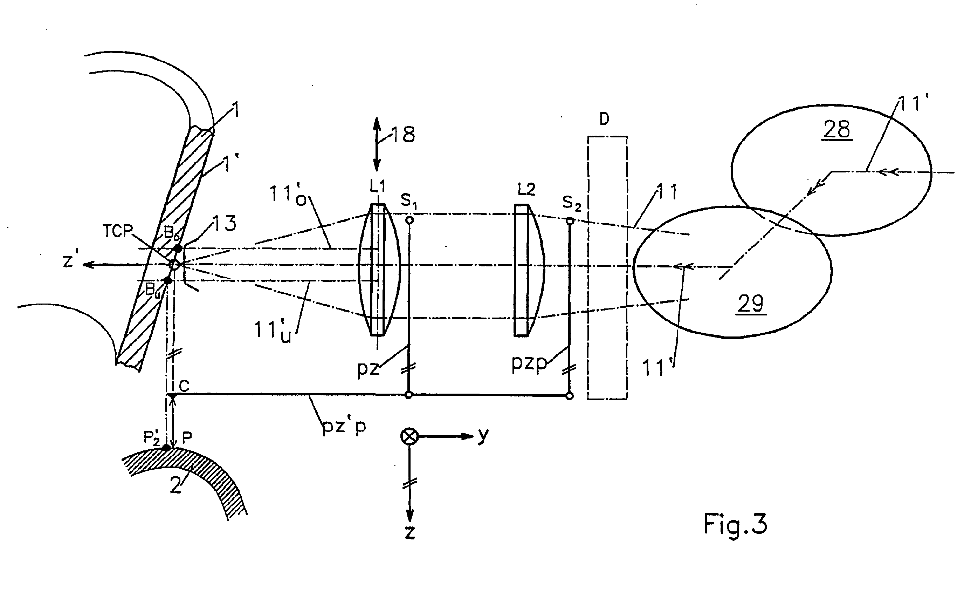

Falls jedoch Werkstückkrümmungen beim Messen berücksichtigt werden sollen, ist es vorteilhaft, so zu verfahren, daß die Abstände des Fokuspunkts vom zweiten Werkstück und/oder eines Elements einer Bearbeitungsoptik vom ersten Werkstück jeweils mit einem Meßgerät anhand mindestens dreier Lichtpunkte oder eines Lichtstreifens ermittelt werden, die alle in einer Meßebene angeordnet sind, wie in der z'-z-Ebene der Fig.2 und 3. Das Licht der Lichtpunkte bzw. des Lichtstreifens wird in Abhängigkeit von einer Krümmung reflektiert, was mit dem Meßgerät zu ermitteln ist. Dem Meßergebnis entsprechend können Krümmungskreise errechnet werden. Dem Berechnungsergebnis entsprechend ist der Abstand eines dem Fokuspunkt entsprechenden Bearbeitungspunkts unter Berücksichtigung der Krümmung einzustellen, die mit den Lichtpunkten oder mit dem Lichtstreifen bestimmt wurde.

Das vorbenannte Verfahren wird vorzugsweise so durchgeführt, daß die Mitte zwischen den Lichtpunkten/des Lichtstreifens jeweils sowohl auf den Fokuspunkt als auch auf dessen in Abstandsrichtung projizierten Fußpunkt ausgerichtet ist. Damit wird eine genauere Erfassung der Krümmung ermöglicht und die Erfassung ist richtungsunabhängig.

Bei der Durchführung des Verfahrens ist zu berücksichtigen, daß von der Schneidstelle Prozeßstrahlung ausgeht, beispielsweise Wärmestrahlung. Das Verfahren muß also so durchgeführt werden, daß diese Strahlung das Ergebnis nicht verfälscht. Im Hinblick hierauf wird zweckmäßigerweise so verfahren, daß die Lichtpunkte und/oder der Lichtstreifen mit einem Meßstrahl eines Meßlasers erzeugt werden/wird, daß die Intensität der Meßstrahlung die der Laserstrahlung übertrifft und/oder ein Ausblenden eines Prozeßleuchtens vorgenommen wird, und daß das von den Lichtpunkten oder von dem Lichtstreifen reflektierte Licht hinsichtlich der Krümmung eines Werkstücks oder beider Werkstücke mit einer tiefenscharfen Kameraoptik ausgewertet wird.

Knickarmroboter sind mit einer Regelungs- bzw. Steuerungsfrequenz von ca. 10 Hz langsam. Um die gewünschte Genauigkeit zu erreichen, ist es daher zweckmäßig, das Verfahren so durchzuführen, daß das Konstanthalten des Abstands des Bearbeitungspunkts vom zweiten Werkstück in weicher Echtzeit mit mehr als 40 Hz erfolgt, oder mit mehr als 50 Hz, wenn ein Versatz eines Bearbeitungspunkts von mehr als 28 µm in Abstandsrichtung erfolgt.

Eine Verbesserung der Maßhaltigkeit des Verfahrens läßt sich auch dadurch erreichen, daß ein Bearbeitungspunkt möglichst auf die dem Laserstrahl abgewendete Wandfläche des ersten Werkstücks gelegt wird. Wenn also der nachfolgende Bearbeitungspunkt auf der inneren Wandfläche des ersten Werkstücks liegt, der Fokus aber auf der dem Laserstrahl zugewendeten Vorderwandseite, wird sichergestellt, daß das erste Werkstück nach einer Verschiebung zum zweiten Werkstück im Übergangsbereich und im Überlappbereich auch dann anliegt, wenn dort der Fasenwinkel der Schnittkante des ersten Werkstücks nicht der Neigung des zweiten Werkstücks entspricht, insbesondere wenn ein konstanter Fasenwinkel von 20 bis 40 Winkelgrad geschnitten wurde.

Das erste Werkstück ist üblicherweise dreidimensional ausgebildet. Dementsprechend muß der Abstand eines Elements der Bearbeitungsoptik vom ersten Werkstück nachgeregelt werden können. Mit einer solchen Nachregelung ändert sich jedoch auch der Abstand des Fokuspunkts vom zweiten Werkstück, also in Abstandsrichtung. Im Hinblick hierauf ist es vorteilhaft, das Verfahren so durchzuführen, daß zumindest der den Abstand des Fokuspunkts in Abstandsrichtung messende Sensor parallelogrammgesteuert eingestellt wird, wobei zwei einander parallele Parallelogrammarme abstandsrichtungsparallel gehalten werden. Mit der Parallelogrammsteuerung wird gewährleistet, daß die Abstandsrichtung stets auf die Richtung des Zusammenbaus der beiden Werkstücke abgestimmt ist. Alle denkbaren Abstandsrichtungen sind also einander parallel bzw. es wird ein absolutes Maß der Abstandsrichtung erreicht. Außerdem ist es mit den beiden einander parallelen Parallelogrammarmen möglich, einen in Abstandsrichtung messenden Sensor möglichst dicht am zweiten Werkstück anzuordnen, was der Genauigkeit der Messung dienlich ist.

In besonderer Weise kann das vorbeschriebene Verfahren so durchgeführt werden, daß eine Parallelogrammsteuerung zwei einander parallele Parallelogrammarme aufweist, von denen einer in der Anstellrichtung des Laserstrahls gehalten wird. Damit kann die Parallelogrammsteuerung kompakt in die Roboterhand integriert werden. Zur Abstandsmessung in der Anstellrichtung des Laserstrahls könnten herkömmliche Konstruktionen eingesetzt werden. Es ist möglich, das von den Parallelogrammarmen gebildete Parallelogramm zum Zwecke der Anpassung der beiden Werkstücke in ihren Fügebereichen um eine mit der Anstellrichtung des Laserstrahls identische Achse zu schwenken.

Beim Schneiden des ersten Werkstücks soll erreicht werden, daß dessen Schnittkante möglichst fugenlos auf der Oberfläche des zweiten Werkstücks aufliegt. Zu diesem Zweck kann das Verfahren so durchgeführt werden, daß die Anstellrichtung des Laserstrahls parallel zu einer in einem Fußpunkt des Fokuspunkts aufgespannten Tangentialebene ist und/oder zumindest in einem Sattelbereich der Werkstücke einen vorbestimmten Fasenwinkel bildet. Wird die Anstellrichtung des Laserstrahls parallel zu einer im Fußpunkt des Fokuspunkts aufgespannten Tangentialebene gewählt, so wird eine Schnittkante des ersten Werkstücks erreicht, die in dieser Tangentialebene angeordnet ist, wenn die beiden Werkstücke zusammengefahren sind. Es liegt dann eine optimale Anpassung des ersten Werkstücks an das zweite vor. Wird mit einem vorbestimmten Fasenwinkel geschnitten, so kann hierdurch eine besondere Ausbildung der Schnittkante des ersten Werkstücks erreicht werden, beispielsweise eine zwischen dieser Schnittkante und dem zweiten Werkstück gelegene offene Fuge zum Einbringen von Fügewerkstoff.

Ausreichende Genauigkeiten der Ausbildung der Schnittkante des ersten Werkstücks lassen sich erreichen, wenn die Anstellrichtung des Laserstrahls mit einer Genauigkeit von ± 2° eingestellt wird.

Die Präzision der Ausbildung der Schnittkante des ersten Werkstücks kann auch dadurch positiv beeinflußt werden, daß die Anstellrichtung des Laserstrahls beim Schneiden immer senkrecht zu einer Schnittlinie einer x-y-Ebene mit einer im Fokuspunkt aufgespannten Tangentialebene gehalten wird. Damit wird erreicht, daß stets die kürzeste Werkstückdicke geschnitten wird.

Um den baulichen Aufwand bei der Durchführung des Verfahrens klein zu halten, ist es zweckmäßig, wenn der konstante Abstand des Bearbeitungspunkts vom zweiten Werkstück mittels einer Steuerung eines optischen Elements im Strahlengang der Laserstrahlung erreicht wird. Da auf diese Weise nur geringe Massen bewegt zu werden brauchen, ergeben sich hohe Genauigkeiten bei geringen Stellzeiten. Die Meß- und Regelfrequenzen können entsprechend hoch sein.

Die Erfindung bezieht sich auch auf eine Vorrichtung mit den Merkmalen des Oberbegriffs des Anspruchs 17. Um bei einer solchen Vorrichtung die oben beschriebenen Genauigkeitsprobleme zu lösen, kann die Vorrichtung mit den Merkmalen des Kennzeichenteils des Anspruchs 17 ausgebildet werden. Mit diesen Merkmalen können die oben zu den Verfahren beschriebenen Vorteile erreicht werden. Insbesondere ist die dort angesprochene Bahn- bzw. Bahnwiederholgenauigkeit möglich.

Von besonderer Bedeutung ist es, die Vorrichtung so auszubilden, daß der Sensor von einem Lenkerparallelogramm ausrichtbar ist, dessen eines Armpaar entsprechend der Abstandsrichtung ausgerichtet ist und dessen anderes Armpaar entsprechend einer Anstellrichtung eines Laserstrahls ausgerichtet ist. Mit Hilfe des Lenkerparallelogramms kann der Fokuspunkt bzw. der diesem entsprechende Bearbeitungspunkt durch Steuerung und/oder durch Berechnung oder durch starre Führung in einem konstanten Abstand zum zweiten Werkstück in der Abstandsrichtung gehalten werden, indem der Sensor vom Lenkerparallelogramm ausgerichtet wird.

Um auf dreidimensionale Ausgestaltungen des ersten Werkstücks Rücksicht nehmen zu können, kann die Vorrichtung so ausgebildet werden, daß an einem einer Anstellrichtung des Laserstrahls entsprechend ausgerichteten, oberen Parallelogrammarm ein Sensor angeordnet ist, mit dem ein Abstand eines Elements einer Bearbeitungsoptik vom ersten Werkstück meßbar ist. Es wird ermöglicht, den in Abstandsrichtung ausgerichteten Sensor ohne Änderung seines Abstands vom zweiten Werkstück auch im Falle einer Abstandsänderung des ersten Werkstücks in Anstellrichtung des Laserstrahls zu halten.

Wenn der obere Parallelogrammarm von einer Drehachse einer Roboterhand gebildet ist, ergibt sich dadurch einerseits eine kompakte Ausbildung im Bereich der Roboterhand und zugleich eine Möglichkeit, das von den Armpaaren gebildete Lenkerparallelogramm mit der Drehachse der Roboterhand um die Längsachse dieser Drehachse bzw. um die Achse der Anstellrichtung zu schwenken.

Eine weitere Ausbildung der Vorrichtung zeichnet sich dadurch aus, daß ein unterer Parallelogrammarm parallel zu einer Drehachse einer Roboterhand angeordnet und daran mit einem parallel zu der Abstandsrichtung ausgerichteten Armpaar gelenkig und antreibbar befestigt ist. Damit kann die Vorrichtung im Bereich der Roboterhand noch kompakter ausgebildet werden und zugleich ist es durch den Antrieb des unteren Parallelogrammarms möglich, den Abstand eines in Abstandsrichtung messenden Sensors vom zweiten Werkstück genau in Abstandsrichtung und mit ± 2° zur Oberfläche des zweiten Werkstücks zu halten.

Die Vorrichtung kann dadurch gekennzeichnet sein, daß im Strahlengang des Laserstrahls ein optisches Element angeordnet ist, mit dem der Bearbeitungspunkt um eine Mittelstellung herum verschieblich ist. Damit ist der Bearbeitungspunkt in beiden Richtungskomponenten der Anstellrichtung verschieblich, was insbesondere von Vorteil ist, wenn das erste Werkstück in Anstellrichtung größere Abmessungsänderungen aufweist, die schnell ausgeregelt werden sollen.

Um den Bearbeitungspunkt zu verschieben, kann die Vorrichtung so ausgebildet werden, daß das optische Element ein Kippspiegel oder eine verschiebbare Linse ist, oder aus zwei gegeneinander verdrehbaren Prismen besteht. Sämtliche vorgenannten Bauteile sind schnell und präzise verstellbar, so daß sich entsprechende Verbesserungen bei der Regelungs- und Steuerungsfrequenz und damit bei der Maßhaltigkeit ergeben.

Ein kompakter und steifer Aufbau der Vorrichtung im Bereich der Roboterhand wird insbesondere erreicht, wenn ein Abstandsstellbereich vom Fokuspunkt zu einem Bearbeitungspunkt ± 1,5 mm in einer Parallelogrammebene beträgt. Unter dieser Bedingung lassen sich insbesondere sehr genaue Encoder für die Einstellung optischer Bauteile als schnelle Achse zur Verstellung des Bearbeitungspunkts einsetzen.

Des weiteren kann es vorteilhaft sein, daß zur Erzeugung der Laserstrahlung ein Laser mit einer Strahlqualität von k 0,35 vorhanden ist. Die hohe Strahlqualität gewährleistet eine schlanke Form des Laserstrahls im Fokusbereich, die bei unterschiedlichen Abständen vom ersten Werkstück in Anstellrichtung zu schneiden erlaubt, ohne dazu eine Abstandskorrektur vornehmen zu müssen, beispielsweise durch Verstellung eines optischen Elements einer Bearbeitungsoptik in Anstellrichtung.

Um Abstandsmessungen in Anstellrichtung durchführen zu können, kann die Vorrichtung so ausgebildet werden, daß ein mit dem Laserstrahl koaxialer Lasermeßstrahl mit einem Wellenlängenbereich von 500 bis 1000 nm vorhanden ist. Innerhalb des vorgenannten Wellenlängenbereichs ist der Lasermeßstrahl in der Lage, zur Verstellung des Laserstrahls eingesetzte bewegliche optische Bauteile unbeeinflußbar von deren jeweiliger Stellung zu durchdringen, um dort fokussiert zu werden, wo eine Messung vorgenommen werden soll.

Wenn ein an dem unteren Parallelogrammarm angeordneter Sensor zu einem mit Weißlicht arbeitenden Meßgerät gehört, können erhebliche Genauigkeiten bei der Messung des Abstands in Abstandsrichtung erreicht werden, beispielsweise eine Genauigkeit von besser als ± 10 µm.

Vorteilhaft ist es, die Vorrichtung so auszubilden, daß sie die Hand eines Roboters bildet, der hängend an einer linearen Zusatzachse befestigt ist. Damit wird der Handhabungsbereich des Roboters erheblich vergrößert, so daß Spaceframe-Konstruktionen bearbeitet werden können, also leiterartige Fachwerkkonstruktionen, die aufgrund ihrer Abmessungen und Anordnungen vielfältige Positionierbarkeiten der Roboterhand bzw. des Bearbeitungskopfes benötigen.

Die Erfindung wird anhand von in der Zeichnung dargestellten Ausführungsbeispielen erläutert. Es zeigt:
- Fig.1: eine perspektivische schematische Darstellung zweier Werkstücke zur Erläuterung der für die Erfindung maßgeblichen Geometriegrößen,
- Fig.2: ein Prinzipbild einer Parallelogrammanordnung in Verbindung mit einer schematisiserten Teildarstellung einer Roboterhand,
- Fig.3: ein Schema eines Aufbaus einer mit einem Lenkerparallelogramm zusammengebauten Drehachse, und
- Fig.4: eine schematisierte Schnittdarstellung optisch wirksamer Elemente eines Bearbeitungskopfs bzw. einer Roboterhand.

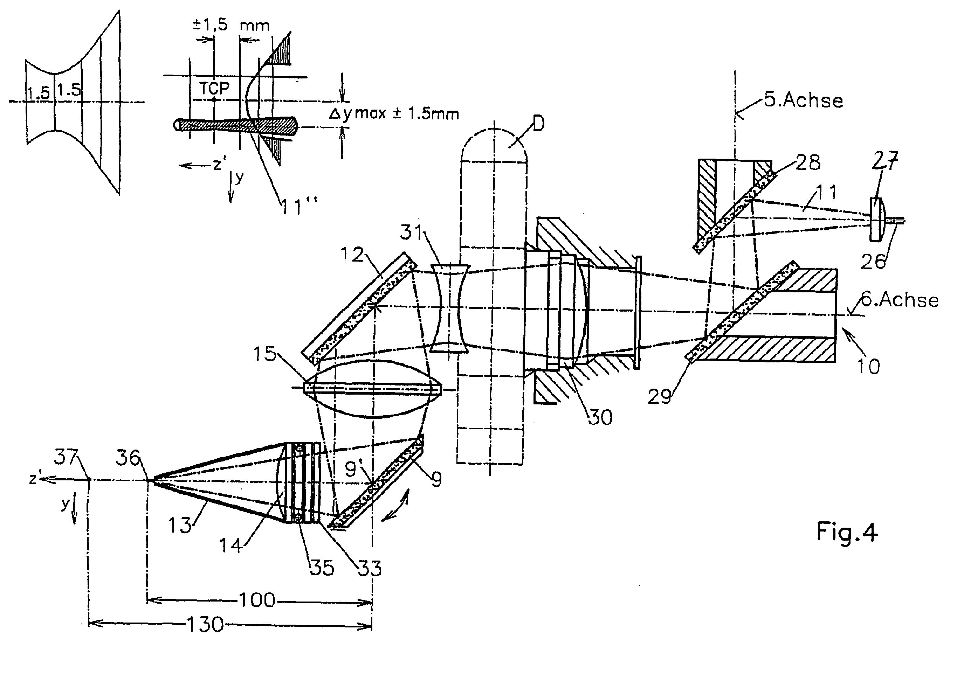

Um robotergesteuertes Schneiden von Werkstücken durchführen zu können, sind als Roboter ausgebildete Handhabungsgeräte erforderlich, beispielsweise Knickarmroboter. Derartige Knickarmroboter sind allgemein bekannt und können beispielsweise als 6-Achsen-Roboter ausgebildet sein. Beispielsweise ist eine Basisachse vorhanden, die als Drehachse ausgebildet ist und an bzw. auf einer Tragfläche befestigt ist. An eine solche Drehachse kann eine Schwenkachse angeschlossen sein, nämlich ein Roboterarm, der an seinem anderen Ende eine weitere Schwenkachse für einen Dreharm zeigt, der eine vierte Roboterachse bildet und an seinem werkstückseitigem Ende eine Roboterhand mit einem Bearbeitungskopf trägt. Die Roboterhand besitzt eine Handachse als fünfte Achse des Roboters, deren Bauteile in Fig.4 schematisch dargestellt sind. Die fünfte Achse des Roboters trägt eine weitere Achse, die sechste Achse, die in Fig.4 generell mit 10 bezeichnet wurde. Die fünfte Achse ist samt Spiegel 28 und 29 um die sechste Achse und um 90° in die Zeichnungsebene gedreht dargestellt.

In der Roboterhand ist eine Bearbeitungsoptik ausgebildet, deren Bestandteile aus Fig.4 ersichtlich sind. Laserstrahlung 11 wird beispielsweise mit einer Glasfaserleitung 26 zugeleitet, beispielsweise mit einer Lichtleitfaser. Die Faserankopplung erfolgt derart, daß die Laserstrahlung eines diodengepumpten Festkörperlasers in einer zum Schneiden geeigneten Strahlqualität im Bereich der dritten Achse in den Knickarmroboter eingekoppelt wird. Diese Achse und die von ihr getragene Roboterhand mit dem Bearbeitungskopf bzw. mit der sechsten, der Drehachse 10 können entsprechend der EP-A-0 901 875 ausgebildet sein, in der die Faserankopplung im Detail beschrieben ist.

Die aus der Glasfaserleitung herrührende Laserstrahlung 11 gelangt über eine Vorkollimatorlinse 27 zu zwei 90°-Spiegeln 28,29 und dann zu einer Kollimatorlinse 30, die den Strahl verjüngt. Der verjüngte Strahl gelangt zu einer Aufweitungslinse 31 und von dort zu einem Spiegel 12, der als Planspiegel ausgebildet ist. Von diesem Spiegel 12 gelangt die Strahlung zu einer Fokussierlinse 15. Von der Fokussierlinse 15 gelangt die Laserstrahlung 11 auf einen zum Beispiel 90°-Kippspiegel 9, der in den Richtungen des dargestellten Doppelpfeils kippbeweglich ist. Die Kippbeweglichkeit beträgt beispielsweise ± 0,45°. Die Kippachse 9' ist senkrecht zur Achse des Laserstrahls angeordnet, sie verstellt in y-Richtung. Der Kippspiegel 9 läßt die fokussierte Laserstrahlung durch ein Schutzglas 33 und quer zu einem Druckluft-Crossjet in eine Schneiddüse 13 gelangen. Die Schneiddüse 13 ist eine Überschalldüse in Form einer Laval-Langlochdüse, die mit Hilfe der Drehachse 10 vor dem Kippspiegel 9 in y-Richtung gesteuert werden kann. Infolgedessen kann erreicht werden, daß ein Schwenken des Kippspiegels 9 stets dazu führt, daß die Laserstrahlung 11 durch das Langloch der Düse 13 ungehindert aus der Düse austreten kann. Im Fall des Schneidens liegt der Zielpunkt TCP des Roboters bzw. seines Koordinatensystems in der Stellung 36 beispielsweise 100 mm vom Zentrum des Umlenkspiegels 9 entfernt. Der Fokuspunkt TCP bzw. Tool Center Point TCP ist der Bezugs- oder Zielpunkt des Roboters bzw. seines Koordinatensystems. Der Fokuspunkt der Laserstrahlung liegt, wenn er sich in der Mittellage seines Regelbereichs von ± 1,5 mm befindet, auf dem TCP. Nach Messung und Berechnung wird er zum Beispiel mit dem Kippspiegel 9 auf einen Bearbeitungspunkt B gesteuert.

Die Düse 13 dient nur dem Schneiden und ist daher mit einem Scharnier 35 am Bearbeitungskopf befestigt, so daß sie zusammen mit einer Schneidlinse 14 weggeklappt werden kann, um mit derselben Bearbeitungsoptik - bis auf die Schneidlinse - fügen zu können, nämlich mittels Laserstrahlung zu schweißen. Die Düse 13 kann auch abnehmbar sein. Im Fügefall entfällt eine Nachfokussierung durch die Schneidlinse 13 und der Fokuspunkt TCP liegt in der Stellung 37 beispielsweise 130 mm vor dem Zentrum des Spiegels 9 bzw. von dessen Kippachse 9' entfernt.

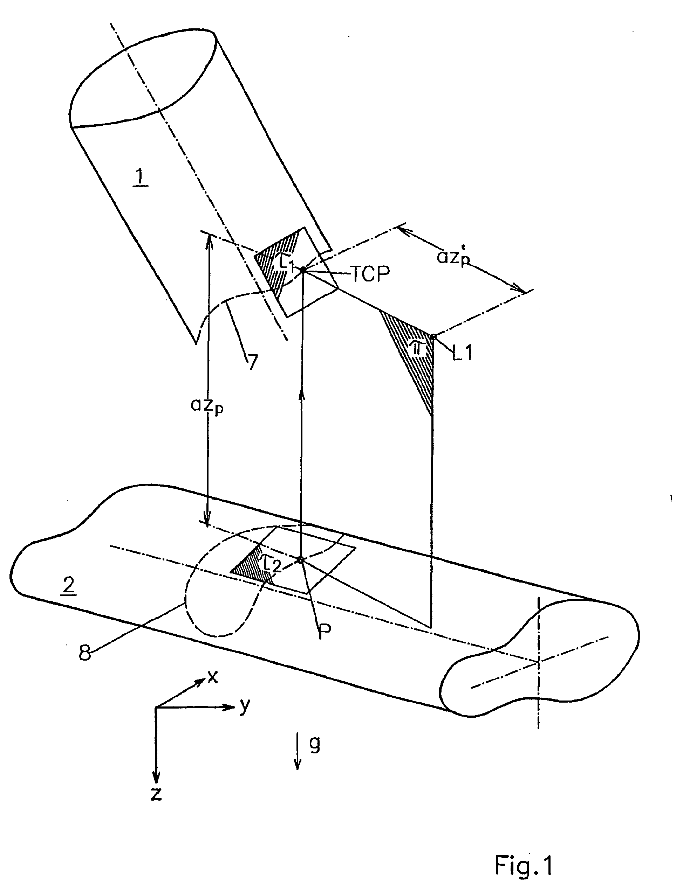

Mit dem vorbeschriebenen Knickarm-Roboter soll zumindest ein Werkstück 1 so geschnitten werden, daß es mit einem Werkstück 2 gefügt werden kann. In Fig.1 sind zwei rohrförmige Werkstücke 1,2 beliebigen Querschnitts dargestellt. Es soll ein Fügen der Werkstücke 1,2 erfolgen, bei dem das Werkstück 1 mit einer Stirnseite an den Außenumfang des Werkstücks 2 dicht anschließt. Bauteilungenauigkeiten und Roboterbahnungenauigkeiten sollen keinen Einfluß haben, der das nachfolgende Fügen in unannehmbarer Weise beeinträchtigt. Beispielsweise soll bei einem Schweißen mit Laserstrahlung ein Nahteinfall vermieden werden. Hierzu muß das Werkstück 1 im Bereich seiner Stirnseite eine Kontur 7 erhalten, die auf den Außenumfang des Werkstücks 2 paßt. Auf diesem Werkstück 2 ist die zu der Kontur 7 gehörende Fügelinie 8 dargestellt. Das Werkstück 1 muß nach Fertigstellung seiner Stirnseite aus der in Fig.1 dargestellten Stellung in Richtung g mit dem zweiten Werkstück 2 zusammengebaut werden. Dieser Umstand wird dahingehend ausgenutzt, daß das erste Werkstück 1 in der Nähe des zweiten Werkstücks 2 in einer Stellung angeordnet wird, in der die Kontur 7 hergestellt werden kann. Das Schneiden erfolgt mit der Laserstrahlung 11, die einen Fokuspunkt TCP auf dem Werkstück 1 hat. In Fig.4 ist oben rechts der Regelbereich für das Schneiden schematisch dargestellt. Die Strahlfokuslage kann in z'-Richtung und in y-Richtung geändert werden. In y-Richtung ergibt sich ein Δyₘₐₓ für den dargestellten Teilabschnitt 11' der Laserstrahlung 11 von beispielsweise 1,5 mm. In z'-Richtung kann der Fokuspunkt TCP ebenfalls um ± 1,5 mm verschoben werden. Bei genügend guter Strahlqualität ist die Fokuslagenverstellung in z'-Richtung unnötig. Die Darstellung links oben läßt erkennen, daß im Bereich von ± 1,5 mm keine Strahlverbreiterungen auftreten, die zu einer unannehmbaren Vergrößerung der Schnittfuge führen würden, weil sie per Berechnung korrigierbar ist, wenn nötig. Die beiden oberen Abbildungen der Fig.4 veranschaulichen, daß Laserstrahlung mit hoher Strahlqualität eingesetzt wird, so daß sich eine schlanke Fokussierung ergibt.

In Fig.1 ist abgebildet, daß der Fokuspunkt TCP von der Oberfläche des Werkstücks 2 in der Richtung g des Zusammenbaus der beiden Werkstücke 1,2 einen Abstand azp aufweist. Wenn alle Fokuspunkte TCP der Kontur 7 in der Richtung g des Zusammenbaus der beiden Werkstücke 1,2 denselben Abstand azp von der Oberfläche des Werkstücks 2 haben, läßt sich die gewünschte optimale Anpassung der Kontur 7 an den Außenumfang des Werkstücks 2 erreichen. Infolgedessen kann so verfahren werden, daß beim Schneiden der Kontur 7 des ersten Werkstücks 1 stets darauf geachtet wird, daß der Abstand des Fokuspunkts TCP bzw. des diesem entsprechenden Bearbeitungspunkts vom zweiten Werkstück 2 in einer gleichgerichteten Abstandsrichtung z gleich dem vorbestimmten Abstand azp ist. Die Abstandsrichtung z ist dabei stets auf die Richtung g des Zusammenbaus abgestimmt, nämlich dieser parallel.

Damit der Abstand azp des Fokuspunkts TCP vom zweiten Werkstück 2 während des Schneidens konstant gehalten werden kann, muß der Abstand azp gemessen werden. Die Messung muß wiederholt erfolgen, nämlich so häufig, daß die oben genannte Bahngenauigkeit im Bereich von ± 0,05 x Blechdicke erreicht wird. Auf das Meßergebnis hat einerseits die Ausbildung der Oberfläche des zweiten Werkstücks 2 einen Einfluß, wie auch die Ausgestaltung der Oberfläche des ersten Werkstücks 1, sofern dieses nicht eben und in einer Position angeordnet ist, in der sich der Abstand des Werkstücks 1 von der Bearbeitungsoptik nicht ändert. Nur in letzterem Fall genügt es, ausschließlich den Abstand azp des Fokuspunkts TCP vom zweiten Werkstück 2 zu messen, um ihn beim Schneiden konstant zu halten. In allen anderen Fällen ist es erforderlich, eine wiederholte Messung eines Abstands az'_{P} durchzuführen, den ein Element der Bearbeitungsoptik bzw. ein Fokussierelement L1 vom ersten Werkstück 1 hat. Auch dieser Abstand muß dann konstant gehalten werden. Zur Einhaltung der vorgenannten Bedingungen kann dann ein in Fig.2 dargestelltes idealisiertes Ersatzgetriebe ausgebildet werden, in der außer den beiden Werkstücken 1,2 die Drehachse 10 der Roboterhand gezeigt wird, sowie zwei Sensoren A,C zur Abstandsmessung. Bei diesen Sensoren A,C kann es sich um berührungslos messende Bauteile handeln, aber auch um Taster oder sogar um Rollen, falls der Roboter so programmiert ist, daß er gleichzeitig gegen beide Werkstücke 1,2 drückt. Dabei werden dann Pneumatik- oder Hydraulikzylinder eingesetzt. Zur Bearbeitung von Werkstücken aus Stahlblech mit einer Wanddicke von weniger als einem Millimeter ist das aber nicht geeignet, um die erforderlichen Bahngenauigkeitswerte zu erreichen.

Es ist daher zweckmäßig, berührungslose Sensoren A,C parallelogrammgesteuert zu positionieren. Ein Lenkerparallelogramm 3,4,5,6 besteht aus einem Armpaar pz,pzp und einem weiteren Armpaar pz',pz'p. Die Arme dieser Armpaare sind einander jeweils parallel und jeweils zwei Arme bilden Gelenkpunkte 3 und 4 und 5 und 6, wobei der Gelenkpunkt 3 im Hinblick auf die thermischen Prozesse im Bereich des Fokuspunkts TCP als eine abstandhaltende Schalenkonstruktion ausgebildet ist, die den Sensor A auf vorbestimmtem Abstand 16 zu halten vermag. Im Bereich des unteren Armes pz'p ist der Sensor C ebenfalls in einem vorbestimmten Abstand 17 vom Werkstück angeordnet.

Das Parallelogramm ist so ausgebildet, daß sein oberer Arm pz' in einer Anstellrichtung z' des Laserstrahls 11 bzw. der Längsachse der sechsten Achse 10 angeordnet ist. Mit dieser Achse 10 wird die Laserstrahlung in Anstellrichtung z' unter Einsatz eines Fokussierelements L1 abgegeben und auf den Fokuspunkts TCP fokussiert. Bezogen auf die y-z-Ebene hat das eine Parallelogrammebene π aufspannende Lenkerparallelogramm einen Anstellwinkel α zur y-Richtung. Gleichwohl ist die Anstellrichtung mit z' bezeichnet, weil das einer Bezeichnungsgepflogenheit des Fachmanns am nächsten kommt. Die Anstellung des Lenkerparallelogramms 3,4,5,6 mit einem Anstellwinkel αwird von der Robotersteuerung auf der Basis von CAD-Daten vorgegeben. Dabei wird vor allem berücksichtigt, daß die Anstellrichtung z' des Laserstrahls 11 parallel zu einer Tangentialebene τ2 ist, die in einem Fußpunkt P des Fokuspunkts TCP auf dem zweiten Werkstück 2 aufgespannt ist. Dabei sind der Fußpunkt P und der Fokuspunkt TCP durch die Abstandsrichtung z aufeinander bezogen. Der Winkel α muß nachgesteuert werden, je nach Ausbildung des Werkstücks 2, wenn sich die Stellung der Tangentialebene τ2 ändert. Eine derartige Nachsteuerung führt aufgrund des Parallelogrammverhaltens aller Parallelogrammarme nicht zu einer Veränderung der Ausrichtung des den Sensor C tragenden Arm pz.

Falls die Tangentialebene τ2 infolge der Ausbildung des Außenumfangs des Werkstücks 2 nicht vertikal zur Darstellungsebene der Fig.4 ist, sondern in einem Winkel dazu, kann die Drehachse 10 um z' drehen, so daß das Lenkerparallelogramm 3,4,5,6 in eine entsprechende Winkelstellung zur Darstellungsebene der Fig.2 kommt.

Zusätzlich ist bei der Anstellrichtung z' des Laserstrahls darauf zu achten, daß diese beim Schneiden immer senkrecht zu einer Schnittlinie einer y-x-Ebene mit der im Fokuspunkt TCP aufgespannten Tangentialebene τ1 gehalten wird. Das trägt zu einer Minimierung der Schnittlänge in der Wand des Werkstücks 1 bei und erhöht die Genauigkeit.

Entsprechend dem Meßergebnis des Sensors C wird der Abstand azp des Fokuspunkts TCP bzw. eines diesem entsprechenden Bearbeitungspunkts B vom Werkstück 2 konstant gehalten, also der Abstand azp zwischen TCP und P in Fig.1 bzw. ein Abstand az_{B} in Fig.2. Hierzu braucht aber nicht die Roboterhand bewegt zu werden bzw. die in Fig.2 dargestellte Hülle des Schneidkopfs SK des Knickarmroboters oder eines kartesischen Roboters mit mindestens vier Achsen. Es genügt vielmehr, das Lenkerparallelogramm 3,4,5,6 so zu steuern, daß der Arm pz den Sensor C innerhalb des vorgegebenen Meßwegbereichs vom Werkstück 2 weg oder auf dieses zustellt. Wird der Sensor C als kapazitiver berührungsloser Sensor ausgebildet, so kann er einen Meßwegbereich von ca. 0,3 bis 5 mm haben und es erfolgt eine Messung in Richtung z mit einer Genauigkeit von ca. ± 10 µm.

Die Änderung der Anstellung des Lenkerparallelogramms 3,4,5,6 bzw. des Anstellwinkels α erfolgt roboterseitig mit einem Roboterelement R, das den Schneidkopf SK der Roboterhand mit einer schematisch dargestellten Kugelgelenkkonstruktion um den Gelenkpunkt 6 verstellt, so daß sich die Lage der Anstellrichtung z' entsprechend ändert.

Eine Änderung des Abstands azp des Fokuspunkts TCP von seinem Fußpunkt P hat bei dreidimensionaler Ausbildung des Werkstücks 1 zur Folge, daß der Fokuspunkt TCP nicht mehr auf der Werkstückoberfläche liegt. Es muß eine Nachstellung erfolgen, zu der der Sensor A herangezogen werden kann, der den Abstand vom Werkstück in einem Bereich ± 40 µm genau mißt. Diesem Meßergebnis entsprechend kann der Fokuspunkt TCP eingestellt werden. Hierzu wird nicht die Roboterhand bewegt, sondern lediglich ein Fokussierelement L1 bzw. deren Halterung, so daß damit der Fokuspunkt TCP entsprechend verlagert werden kann. Fig.2 zeigt Schiebekupplungen 32 in den Armen pz',pz'p zur Verstellung des Fokussierelements L1.

Die notwendigen Stellgeschwindigkeiten ergeben sich aus der Eigenfrequenz des Roboters zu ca. 0,02 m/sec. Es erfolgt eine Durchführung der Messungen und der Regelungen in weicher Echtzeit mit mehr als 40 Hz im Vergleich zu herkömmlichen Einstellfrequenzen von Robotern mit 8 bis 15 Hz. Die Stellwege der Achsen sind ca. ± 1,5 mm groß. Ein Vorlauf eines Sensormeßpunktes vor einem Bearbeitungspunkt B bzw. vor dem Fokuspunkt TCP beträgt zum Beispiel 0,1 mm bei einer Signalauswertungsgeschwindigkeit von 1 kHz und 6 m/min. Schneidgeschwindigkeit am ersten Werkstück 1. Ein Verzicht auf einen Vorlauf ergibt nur einen sehr geringen Fehler im Sattelbereich. Die beschriebene Nachregelung des Fokuspunkts TCP benötigt ein absolutes Maß der Richtung z, das ist die beschriebene Richtung g, mit dem die Werkstücke 1,2 zum Schweißen nach einer Schrottentnahme zusammengefahren werden. Diese Richtung g kann von einem Kreiselkompaß oder von zwei Gyrometern vorgegeben werden, mit denen ± 0,007° statt der oben genannten ± 0,023° des Knickarmroboters erreichbar sind.

Fig.3 zeigt eine Ausbildung einer Bearbeitungsoptik, die insbesondere für eine Dickblechbearbeitung geeignet ist. Laserstrahlung 11 wird über Spiegel 28,29 der fünften Roboterachse auf einem Strahlengang 11' in eine Längsachse einer Bearbeitungsoptik geführt, die in der sechsten Roboterachse angeordnet ist. Diese sechste Roboterachse der Roboterhand ist eine hohle, lediglich schematisch angedeutete Drehachse D. Die Bearbeitungsoptik ist mit ihrer Längsachse bei einem Anstellwinkel von α = 0 in Anstellrichtung z' auf das erste Werkstück 1 gerichtet, auf dessen roboterhandseitigen Wandfläche 1' der Fokuspunkt TCP ausgebildet wird.

Die Ausbildung des Fokuspunkts TCP erfolgt mit einem Fokussierelement L1, dem die Laserstrahlung 11 von einem Kollimator L2 zugeführt ist. Die fokussierte Laserstrahlung 11 tritt aus der Bearbeitungsoptik durch eine Langlochdüse 13 aus, deren Längsrichtung in der Darstellungsebene zu denken ist. Die Drehachse D vermag die Bearbeitungsoptik einschließlich der Langlochdüse 13 so zu drehen, daß ein noch zu beschreibendes Lenkerparallelogramm in jede y-z-Ebene zu drehen und dort zu halten ist. Die y-z-Ebene entspricht dann der z-z'-Ebene. Mit der vorbeschriebenen Bearbeitungsoptik ist die in Fig.4 links oben dargestellte Kaustik herstellbar, die zum Schneiden von 1,5 mm dickem Stahlblech geeignet ist, wenn ein 2,2 kW-diodengepumpter Festkörperlaser mit einer Schnittgeschwindigkeit von ca. 2 m/Min. angewendet wird. Damit die Fokusform bzw. die Kaustik in Anstellrichtung z' so schlank wie möglich ist, um nämlich zum Schneiden besonders geeignet zu sein, sollte der optische Weg so lang wie möglich ausgebildet werden. Aus diesem Grund sind im Bearbeitungskopf der Roboterhand zwei 90°-Strahlumlenkungen vorhanden, vergleiche Fig.4.

Das Fokussierelement L1 ist senkrecht zur Laserstrahlachse 11' bzw. z' in der Zeichenebene linear verschiebbar, siehe Doppelpfeil 18. Damit ist es möglich, den Laserstrahl 11 in Fig. 3 nach oben und nach unten zu verlagern. Die Verlagerung ist in Fig.3 mit dem oberen Strahlengangabschnitt 11'ₒ und mit dem unteren Strahlengangabschnitt 11'ᵤ dargestellt. Die Verlagerung beträgt ± 1,5 mm senkrecht zu z'. Damit ergeben sich die Bearbeitungspunkte Bₒ und Bᵤ.

Der Sensor C zeigt immer auf P oder in die Nähe von P, wobei die Richtungen TCP-P, die der Arme pz und pzp und z bzw. g immer untereinander parallel sind. Der Einsatz des Sensors C kann infolge der Anwendung des Arms pz'p in der Nähe des Fußpunkts P gehalten werden. Der Sensor C kann auch in der z-y-Ebene versetzt montiert sein. In diesem Fall ist eine Triangulationsrechnung erforderlich.

Um den Sensor C in der Nähe des Werkstücks 2 zu halten, nämlich in der Nähe des Fußpunktes P in z-Richtung, wird er parallelogrammgesteuert positioniert. Für die Parallelogrammsteuerung ist der untere Parallelogrammarm pz'p ausgebildet, der dem oberen Parallelogrammarm parallel ist, der von der Drehachse D gebildet ist. Sie entspricht dem Parallelogrammarm pz' in Fig.2. Der untere Arm pz'p ist mit zwei einanderparallelen Parallelogrammarmen pz und pzp an der Drehachse aufgehängt. Die Aufhängung erfolgt an jeweils einem Drehpunkt S₁ bzw. S₂, die parallel zu der z-y-Ebene in unterschiedlichen Höhen angebracht werden können. Hierdurch ergeben sich entsprechende konstruktive Freiheiten. Die Länge und Richtung von pz und pzp in Fig.3 ist gleich, ihre Gelenke S₁ und S₂ können aber in unterschiedlichen Höhen angebracht sein. Das Lenkerparallelogramm kann durch einen nicht gezeichneten parallelen Antrieb um die Drehpunkte S₁, S₂ so gesteuert werden, daß der Sensor zumindest im Sattelbereich mit ± 2° senkrecht zur Oberfläche des Werkstücks 2 steht, dabei jedoch immer genau in der z-y-Ebene entsprechend dem Basiskoordinatensystem des Roboters, das unabhängig vom eingestellten Anstellwinkel α der Handachse ist.

Meßwerte des Sensors C, die ermittelten Abstände azp des Fokuspunkts TCP vom zweiten Werkstück 2 bzw. dem darauf gelegenen Fußpunkt P, dienen der Steuerung der Linse L1. Diese lenkt den Laserstrahl 11 auf einen Bearbeitungspunkt B des Bearbeitungsbereichs Bₒ bis Bᵤ der z-y-Ebene. Damit wird der Abstand az_{B} konstant eingestellt. Zuzüglich kann zum Beispiel mittels eines an der Spitze der Düse 13 angeordneten Abstandssensors die Entfernung in Anstellrichtung z' gemessen werden. Unter Anwendung einer im Rechner abgespeicherten Tabelle kann eine Schnittfugenbreitenkorrektur als Funktion der Fokuslage zu Werkstück 1 durchgeführt werden, indem der Bearbeitungspunkt B durch Steuerung der Linse L1 korrigiert wird.

Die Nutzung nur eines Meßwertes azp ist zu ungenau, um eine höhere Bahngenauigkeit als 0,1 mm bei 1 mm Blechdicke für den Abstand az_{B} in z-Richtung zu erreichen. Das gilt auch dann, wenn man die Krümmung im Fußpunkt P aus den bekannten CAD-Daten in Berechnung des Abstand az_{B} einrechnet. Bei ± 0,4 mm Lageunsicherheit des Roboters in y-Richtung und bei ± 0,3 mm Formunsicherheit von mit Innenhochdruck umgeformten Rohren (IHU-Rohren) betrüge der Fehler 0,7 mm bei einem Anstellwinkel α = 45°. Mit einer Krümmungstabelle und einem Meßsensor A an der Spitze der Düse 13 betrüge der Fehler ca. ± 0,3 mm bei einem Krümmungsradius von 25 mm des Werkstücks 2 in der z-y-Ebene, zuzüglich geringerer mechanischer Fehler und geringerer Steuerungsfehler. Infolgedessen ist die beschriebene Vorrichtung im wesentlichen nur für die Bearbeitung dickwandiger Bauteile oder für das T-Fügen eines nahezu ebenen Werkstücks 2 mit einem Werkstück 1 geeignet. Soll die Vorrichtung darüber hinaus angewendet werden, sind weitere Maßnahmen erforderlich, um die Maßhaltigkeit des Verfahrens zu verbessern.

Eine wesentliche Verbesserung der Meß- und Einstellgenauigkeiten läßt sich erreichen, indem zusätzlich zu der Erfassung des Abstands azp die Krümmung des Werkstücks 2 ermittelt wird, die dieses im Fußpunkt P in der jeweiligen z-y-Ebene aufweist. Falls das Werkstück 1 dreidimensional ist, insbesondere rohrförmig, kann eine derartige Erfassung zusätzlich auch am Werkstück 1 ausgeführt werden. Möglichkeiten zur Erfassung der Krümmung der Werkstücke 1,2 im Fußpunkt P bzw. im Fokuspunkt TCP bestehen darin, in deren Nähe Lichtmarkierungen zu erzeugen und zu vermessen, die in der Parallelogrammebene liegen. Derartige Lichtmarkierungen können punktweise oder streifenweise angewendet werden. Punktweise Markierungen lassen sich beispielsweise mit Hilfe von Lichtleitfasern erzielen, mit denen diese Punkte projiziert werden. Lichtstreifen lassen sich durch Scannen erzeugen.

Für eine Krümmungsmessung am Werkstück 2 werden mit Hilfe dreier Fasern drei Punkte projiziert. Der Meßabstand ist wegen der Aufhängung des unteren Sensors C am unteren Arm pz'p kurz. Hier kann ein Weißlichtsensor (Lasermikroskop) eingesetzt werden, der drei "Bilder" an drei Spektrographen überträgt, die mit ca. 1 kHz/Meßaufnahme eingesetzt werden. Falls das Werkstück 2 aus leicht geöltem, feuerverzinktem Werkstoff besteht, sind ein Optikdurchmesser vorn von 12 bis 15 mm, ein Meßabstand von ca. 20 mm über zwei Spiegel ab Sensorausgang und drei Meßflecke mit je 1,5 mm Abstand bei einem Durchmesser von 30 µm machbar, womit ein Meßfehler von ± 10 µm erreicht wird.

Für eine Krümmungsmessung am Werkstück 1 wird ein Meßlaser als Teil des oberen Sensors A eingesetzt. Der Meßlaser überlagert den Laserstrahl mit einem Meßstrahl, der im Fokus wesentlich intensiver ist, als der Laserstrahl. Der Meßstrahldurchmesser beträgt ca. 40 µm bei einer Lichtleistung von 30 mW und einer Wellenlänge von 675 nm ± 5 nm. Die Lichtleistung ist jedenfalls 20 mW und der Wellenlängenbereich beträgt 500 bis 1000 nm. Infolgedessen ist die Leistungsdichte des Meßstrahls in einem engen Wellenlängenfenster höher, als ein Prozeßleuchten, beispielsweise das Rückleuchten an einer Schneidfront oder das eines Schweiß-key-holes. Es ist auch möglich, das Prozeßleuchten auszublenden, indem im Strahlengang der reflektierten Lichtstrahlung zwei Kantenfilter eingesetzt werden. Damit kann das Prozeßleuchten bzw. das key-hole mit einer Blende oder auch mit Hilfe einer Intensitätsschwelle per Rechner ausgeblendet werden. Es genügt eine einzige Sensoreinheit zum Schneiden und zum beim Schweißen erforderlichen Nahtverfolgen.

Der Lasermeßstrahl wird koaxial mit dem Laserstrahl durch die Langlochdüse geführt. Damit wird ein zum Reflektieren geeigneter Auftreffwinkel bei allen Stellungen der Drehachse D im Bezug auf das Werkstück 1 erreicht. Es können schleifende Auftreffwinkel des Lasermeßstrahls vermieden werden, die bei feuerverzinktem Werkstoff schlechte Reflexionseigenschaften zur Folge haben können.

Um die Maßhaltigkeit beim Schneiden weiterhin möglichst zu steigern, ist es zweckmäßig, wenn der Meß- und Regelvorgang in weicher Echtzeit mit mehr als 40 Hz erfolgt. Das gilt insbesondere, wenn der Bearbeitungspunkt B in Abstandsrichtung z um mehr als 20 µm versetzt wird. Es ist dann sinnvoll, daß der Meß- und Regelvorgang in weicher Echtzeit mit mehr als 50 Hz erfolgt. Für einen am Werkstück 2 messenden Sensor sind bis zu 250 Hz zu erreichen. Werden drei voneinander unabhängige Sensoren eingesetzt, lassen sich auch Meß- und Regelfrequenzen von bis zu 1 kHz erreichen.

Weiterhin ist es von Vorteil, möglichst genaue Einstellungen der Sensoren zu erreichen. Die relativ langsame Dreheinstellung des Lenkerparallelogramms 3,4,5,6 in z-Richtung läßt sich mit einem Encoder erreichen, der bei einem Drehbereich von ca. ± 45° eine Genauigkeit von ± 0,01° erreicht. Für die Einstellung des im Strahlengang der Laserstrahlung angeordneten optischen Elements ist ein sehr genauer Encoder von Vorteil. Wird dieses Element als Kippspiegel 9 zur schnellen Verstellung des Bearbeitungspunkts B ausgebildet, so ist ein Drehbereich von ca. ± 0,45° bei einer Winkelgenauigkeit von ± 0,005° nötig und bis zu ± 10^{-4o} machbar.

Das Schneiden des Werkstücks 1 kann mit einer Kamera beobachtet werden, um die Lichtmarkierungen auszuwerten. Dazu sind zum Beispiel die Seitenflanken der Langlochdüse 13 außen so steil ausgebildet, daß die Kamera den gesamten Regelbereich bei einem Anstellwinkel von α = 40° mit der Anstellrichtung z' einsehen kann. Die Kamera ist beispielsweise eine CMOS-Kamera und hat als Auswertungsoptik eine tiefenscharfe Optik, so daß genaue Meßergebnisse zu ermitteln sind. Mit Hilfe der Meßergebnisse am Werkstück 1 können bei allen vorgesehenen Anstellwinkeln α die am Werkstück 1 vorhandenen Krümmungskreise berechnet werden. Die Krümmungskreise werden beispielsweise anhand von vier Punkten berechnet, wobei die Mitte zwischen den äußeren Punkten als Abstand von Teil 1 herangezogen wird. Die Kamera kann mit ihrer Kameramitte so ausgerichtet werden, daß die Mitte des Laserstrahls und alle Meßpunkte auf je einer Kamerazeile liegen, so daß die CMOS-Kamera hier schnell auswerten kann.

Nach dem Schneiden des Werkstücks 1 wird dieses mit dem Werkstück 2 in Richtung g zusammengebaut. Der Zusammenbau erfolgt exakt so, daß der Fokuspunkt TCP auf seinem Fußpunkt P zu liegen kommt. Danach erfolgt das Fügen der beiden Werkstücke 1,2. Die Kontur des Werkstücks 1 ist derart gut an den Außenumfang des Werkstücks 2 angepaßt, daß sich nur geringfügige Abstandsfugen ergeben, die ein Fügeergebnis nicht beeinflussen. Bei einem Schweißen erfolgt beispielsweise kein bzw. nur ein akzeptabler Nahteinfall.

Damit eine nur geringe Spaltfuge erzielt wird, wird das Werkstück 1 so geschnitten, daß die Schnittfläche möglichst parallel zur Tangente im Fußpunkt P ist oder eine vorbestimmte Abweichung dazu hat. Hierzu erfolgt das Schneiden des Werkstücks 1 mit einem vorbestimmten Fasenwinkel, für den das oben gesagte gilt. Bei einem Schweißen kann der obere Sensor A als Nahtfolgesensor eingesetzt werden. Mit der Kamera kann überwacht werden, ob die erstellte Naht dem Verlauf der Schneidbahn entspricht und bedarfsweise kann beispielsweise durch Verschieben der Linse L1 eine Korrektur erreicht werden.

Der Bearbeitungspunkt B kann dem Fokuspunkt TCP in vorbestimmtem Ausmaß nachlaufen. Bei einer Schnittgeschwindigkeit von 2 m/Min. kann er in der Meßebene z-y um 1/9 mm nachlaufen, wenn die Rechen- und Einstellzeit 1/300 Sec. beträgt. Der Nachlauf des Bearbeitungspunkts im Bezug auf die z-y-Meßebene ist mit Hilfe eines Spiegels einstellbar, beispielsweise mit dem Spiegel 9 der Fig.4. Zu diesem Zweck kann er zusätzlich zu seiner Verstellung in der Ebene z-z' aus der dargestellten Stellung heraus auch in zwei Positionen der Ebene x-z' klappbar ausgeführt werden, um einen Vorlauf und um einen Rücklauf zu ermöglichen.

## Patentansprüche

1. Verfahren zum robotergesteuerten Schneiden von zu fügenden Werkstücken (1,2) mit Laserstrahlung (11), die auf ein erstes Werkstück (1) fokussiert wird, dessen geschnittene Kontur (7) mit einem zweiten Werkstück (2) zusammengebaut und gefügt wird, **dadurch gekennzeichnet, daß** das erste Werkstück (1) in der Nähe des zweiten Werkstücks (2) in einer Stellung angeordnet wird, in der die Kontur (7) hergestellt wird, daß beim Schneiden der Kontur (7) des ersten Werkstücks (1) wiederholt der Abstand (azp) des Fokuspunkts (TCP) vom zweiten Werkstück (2) in einer während des Schneidens gleich gerichteten Abstandsrichtung (z) ermittelt wird, die auf eine Richtung (g) des Zusammenbaus der beiden Werkstücke (1,2) abgestimmt ist, und daß ein Abstand (az_{B}) eines Bearbeitungspunkts (B) vom zweiten Werkstück (2) während des Schneidens konstant gehalten wird.

2. Verfahren nach Anspruch 1, **dadurch gekennzeichnet, daß** beim Schneiden der Kontur (7) des ersten Werkstücks (1) zusätzlich zur Abstandsermittlung des Fokuspunktes (TCP) vom zweiten Werkstück (2) eine wiederholte Messung eines Abstands (az') eines Elements (L1) einer Bearbeitungsoptik vom ersten Werkstück (1) erfolgt, und daß dieser Abstand während des Schneidens konstant gehalten wird.

3. Verfahren nach Anspruch 1 oder 2, **dadurch gekennzeichnet, daß** der Abstand (az_{P}) des Fokuspunkts (TCP) vom zweiten Werkstück (2) direkt gemessen wird, und daß der konstante Abstand (az_{B}) eines dem Fokuspunkt (TCP) entsprechenden Bearbeitungspunkts (B) bedarfsweise unter Berücksichtigung der Krümmung des ersten Werkstücks (1) und/oder des zweiten Werkstücks (2) eingestellt wird.

4. Verfahren nach einem der Ansprüche 1 bis 3, **dadurch gekennzeichnet, daß** der Abstand (az') eines Elements (L1) einer Bearbeitungsoptik vom ersten Werkstück (1) mit mindestens einem berührungslosen Sensor (A) in einer Anstellrichtung (z') eines Laserstrahls gemessen wird und/oder daß der Abstand (az_{P}) des Fokuspunkts (TCP) vom zweiten Werkstück (2) mit mindestens einem berührungslosen Sensor (C) gemessen wird.

5. Verfahren nach einem der Ansprüche 1 bis 3, **dadurch gekennzeichnet, daß** die Abstände (azp,az') des Fokuspunkts (TCP) vom zweiten Werkstück (2) und/oder eines Elements (L1) einer Bearbeitungsoptik vom ersten Werkstück (1) jeweils mit einem Taster- oder Rollen-Sensor gemessen werden.

6. Verfahren nach Anspruch 3 oder 4, **dadurch gekennzeichnet, daß** die Abstände (azp,az') des Fokuspunkts (TCP) vom zweiten Werkstück (2) und/oder eines Elements (L1) einer Bearbeitungsoptik vom ersten Werkstück (1) jeweils mit einem Meßgerät anhand mindestens dreier Lichtpunkte oder eines Lichtstreifens ermittelt werden, die alle in einer Meßebene angeordnet sind.

7. Verfahren nach Anspruch 6, **dadurch gekennzeichnet, daß** die Mitte zwischen den Lichtpunkten/des Lichtstreifens jeweils sowohl auf den Fokuspunkt (TCP) als auch auf dessen in Abstandsrichtung (z) projizierten Fußpunkt (P) ausgerichtet ist.

8. Verfahren nach Anspruch 6 oder 7, **dadurch gekennzeichnet, daß** die Lichtpunkte und/oder der Lichtstreifen mit einem Meßstrahl eines Meßlasers erzeugt werden/wird, daß die Intensität der Meßstrahlung die der Laserstrahlung (11) übertrifft und/oder ein Ausblenden eines Prozeßleuchtens vorgenommen wird, und daß das von den Lichtpunkten oder von dem Lichtstreifen reflektierte Licht hinsichtlich der Krümmung eines Werkstücks (1 oder 2) oder beider Werkstücke (1,2) mit einer tiefenscharfen Kameraoptik ausgewertet wird.

9. Verfahren nach einem der Ansprüche 1 bis 8, **dadurch gekennzeichnet, daß** das Konstanthalten des Abstands (az_{B}) des Bearbeitungspunkts (B) vom zweiten Werkstück (2) in weicher Echtzeit mit mehr als 40 Hz erfolgt, oder mit mehr als 50 Hz, wenn ein Versatz eines Bearbeitungspunkts (B) von mehr als 28 µm in Abstandsrichtung (z) erfolgt.

10. Verfahren nach einem der Ansprüche 1 bis 9, **dadurch gekennzeichnet, daß** ein Bearbeitungspunkt (B) möglichst auf die dem Laserstrahl abgewendete Wandfläche des ersten Werkstücks (1) gelegt wird.

11. Verfahren nach einem der Ansprüche 4 bis 10, **dadurch gekennzeichnet, daß** zumindest der dem Abstand (azp) des Fokuspunkts (TCP) in Abstandsrichtung (z) messende Sensor (C) parallelogrammgesteuert eingestellt wird, wobei zwei einander parallele Parallelogrammarme (pz,pzp) abstandsrichtungsparallel gehalten werden.

12. Verfahren nach Anspruch 11, **dadurch gekennzeichnet, daß** eine Parallelogrammsteuerung zwei einander parallele Parallelogrammarme (pz',pzp) aufweist, von denen einer in der Anstellrichtung (z') des Laserstrahls gehalten wird.

13. Verfahren nach Anspruch 11 oder 12, **dadurch gekennzeichnet, daß** die Anstellrichtung (z') des Laserstrahls parallel zu einer in einem Fußpunkt (P) des Fokuspunkts (TCP) aufgespannten Tangentialebene (τ₂) ist und/oder zumindest in einem Sattelbereich (8) der Werkstücke (1,2) einen vorbestimmten Fasenwinkel bildet.

14. Verfahren nach einem der Ansprüche 11 bis 13, **dadurch gekennzeichnet, daß** die Anstellrichtung (z') des Laserstrahls mit einer Genauigkeit von ± 2° eingestellt wird.

15. Verfahren nach einem der Ansprüche 11 bis 14, **dadurch gekennzeichnet, daß** die Anstellrichtung (z') des Laserstrahls (11) beim Schneiden immer senkrecht zu einer Schnittlinie einer x-y-Ebene mit einer im Fokuspunkt (TCP) aufgespannten Tangentialebene (τ1) gehalten wird.

16. Verfahren nach einem der Ansprüche 1 bis 15, **dadurch gekennzeichnet, daß** der konstante Abstand (az_{B}) des Bearbeitungspunkts (B) vom zweiten Werkstück (2) mittels einer Steuerung eines optischen Elements (L1) im Strahlengang der Laserstrahlung (11) erreicht wird.

17. Vorrichtung zum robotergesteuerten Schneiden von zu fügenden Werkstücken (1,2) mit Laserstrahlung (11), die auf ein erstes Werkstück (1) fokussiert ist, dessen geschnittene Kontur (7) mit einem zweiten Werkstück (2) zusammenbaubar und fügbar ist, insbesondere zur Durchführung des Verfahrens nach einem der Ansprüche 1 bis 16, **dadurch gekennzeichnet, daß** die Vorrichtung einen Sensor (c) aufweist, so daß während der Benutzung der Vorrichtung ein auf dem ersten Werkstück (1) ausgebildeter Bearbeitungspunkt (B) in einer während des Schneidens gleich gerichteten Abstandsrichtung (z) einen konstant gehaltenen Abstand (az_{B}) vom zweiten Werkstück (2) aufweist, daß die Abstandsrichtung (z) auf eine Richtung (g) des Zusammenbaus der beiden Werkstücke (1,2) abgestimmt ist, und daß ein Abstand (az_{P}) des Fokuspunkts (TCP) mit dem während des Schneidens in Abstandsrichtung (z) ausgerichteten Sensor (C) meßbar ist.

18. Vorrichtung nach Anspruch 17, **dadurch gekennzeichnet, daß** der Sensor (C) von einem Lenkerparallelogramm (3,4, 5,6) ausrichtbar ist, dessen eines Armpaar (pz,pzp) entsprechend der Abstandsrichtung (z) ausgerichtet ist und dessen anderes Armpaar (pz',pz'p) entsprechend einer Anstellrichtung (z') eines Laserstrahls (11) ausgerichtet ist.

19. Vorrichtung nach Anspruch 17 oder 18, **dadurch gekennzeichnet, daß** an einem einer Anstellrichtung (z') des Laserstrahls (11) entsprechend ausgerichteten, oberen Parallelogrammarm (pz') ein Sensor (A) angeordnet ist, mit dem ein Abstand (az') eines Elements (L1) einer Bearbeitungsoptik vom ersten Werkstück (1) meßbar ist.

20. Vorrichtung nach einem der Ansprüche 18 oder 19, **dadurch gekennzeichnet, daß** der obere Parallelogrammarm (pz') von einer Drehachse (D) einer Roboterhand gebildet ist.

21. Vorrichtung nach einem der Ansprüche 18 bis 20, **dadurch gekennzeichnet, daß** ein unterer Parallelogrammarm (pz'p) parallel zu einer Drehachse (D) einer Roboterhand angeordnet und daran mit einem parallel zu der Abstandsrichtung (z) ausgerichteten Armpaar (pz,pzp) gelenkig und antreibbar befestigt ist.

22. Vorrichtung nach einem der Ansprüche 17 bis 21, **dadurch gekennzeichnet, daß** im Strahlengang des Laserstrahls (11) ein optisches Element angeordnet ist, mit dem der Bearbeitungspunkt (B) um eine Mittelstellung herum verschieblich ist.

23. Vorrichtung nach Anspruch 22, **dadurch gekennzeichnet, daß** das optische Element ein Kippspiegel (9) oder eine verschiebbare Linse (L1) ist, oder aus zwei gegeneinander verdrehbaren Prismen besteht.

24. Vorrichtung nach einem der Ansprüche 17 bis 23, **dadurch gekennzeichnet, daß** ein Abstandsstellbereich vom Fokuspunkt (TCP) zu einem Bearbeitungspunkt (B) ± 1,5 mm in einer Parallelogrammebene (π) beträgt.

25. Vorrichtung nach einem der Ansprüche 17 bis 25, **dadurch gekennzeichnet, daß** zur Erzeugung der Laserstrahlung (11) ein Laser mit einer Strahlqualität von k 0,35 vorhanden ist.

26. Vorrichtung nach einem der Ansprüche 17 bis 25, **dadurch gekennzeichnet, daß** ein mit dem Laserstrahl (11) koaxialer Lasermeßstrahl mit einem Wellenlängenbereich von 500 bis 1000 nm vorhanden ist.

27. Vorrichtung nach einem der Ansprüche 18 bis 26, **dadurch gekennzeichnet, daß** ein an dem unteren Parallelogrammarm (pz'p) angeordneter Sensor (C) zu einem mit Weißlicht arbeitenden Meßgerät gehört.

28. Vorrichtung nach einem der Ansprüche 17 bis 27, **dadurch gekennzeichnet, daß** sie die Hand eines Roboters bildet, der hängend an einer linearen Zusatzachse befestigt ist.

29. Vorrichtung nach einem der Ansprüche 17 bis 28, **dadurch gekennzeichnet, daß** ein Spiegel (9) im Sinne eines Vo- oder Nachlaufs eines Bearbeitungspunkts (B) in unterschiedliche Positionen einer x-z'-Ebene verstellbar ist.

## Claims

1. Method for the robot-controlled cutting of workpieces (1, 2), which are to be joined, by means of laser radiation (11) which is focussed onto a first workpiece (1) whose cut contour (7) is assembled and joined to a second workpiece (2), **characterised in that** the first workpiece (1) is disposed proximate the second workpiece (2) in a position in which the contour (7) is produced, **in that** during cutting of the contour (7) of the first workpiece (1) the distance (az_{P}) between the focal point (TCP) and the second workpiece (2) is repeatedly determined in a distance direction (z) which is aligned in the same direction during cutting and is adapted to a direction (g) of the assembly of the two workpieces (1, 2), and **in that** a distance (az_{B}) between a processing point (B) and the second workpiece (2) is kept constant during cutting.

2. Method as claimed in Claim 1, **characterised in that** during cutting of the contour (7) of the first workpiece (1) a distance (az') between an element (L1) of processing optics and the first workpiece (1) is repeatedly measured in addition to determining the distance between the focal point (TCP) and the second workpiece (2), and **in that** said distance (az') is kept constant during cutting.

3. Method as claimed in Claim 1 or 2, **characterised in that** the distance (az_{P}) between the focal point (TCP) and the second workpiece (2) is directly measured, and **in that** the constant distance (az_{B}) of a processing point (B) corresponding to the focal point (TCP) is adjusted as necessary taking into account the curvature of the first workpiece (1) and/or of the second workpiece (2).

4. Method as claimed in any one of Claims 1 to 3, **characterised in that** the distance (az') between an element (L1) of processing optics and the first workpiece (1) is measured by means of at least one contact-free sensor (A) in an adjustment direction (z') of a laser beam, and/or **in that** the distance (az_{P}) between the focal point (TCP) and the second workpiece (2) is measured by means of at least one contact-free sensor (C).

5. Method as claimed in any one of Claims 1 to 3, **characterised in that** the distances (az_{P}, az') between the focal point (TCP) and the second workpiece (2) and/or between an element (L1) of processing optics and the first workpiece (1) are each measured by means of a pushbutton or roller sensor.

6. Method as claimed in Claim 3 or 4, **characterised in that** the distances (az_{P}, az') between the focal point (TCP) and the second workpiece (2) and/or between an element (L1) of processing optics and the first workpiece (1) are each determined by means of a measuring device using at least three light points or a streamer which are all disposed in a measuring plane.

7. Method as claimed in Claim 6, **characterised in that** the centre point between the light points or the centre point of the streamer is aligned in each case with the focal point (TCP) and also with its nadir point (P) projected in the distance direction (z).

8. Method as claimed in Claim 6 or 7, **characterised in that** the light points and/or the streamer are/is produced by beams of a measuring beam of a measuring laser, **in that** the intensity of the measuring radiation is greater than the intensity of the laser radiation (11) and/or process luminescence is faded out, and **in that** the light reflected from the light points or from the streamer is evaluated by means of camera optics, with depth-of-field, in terms of the curvature of one workpiece (1 or 2) or of the two workpieces (1, 2).

9. Method as claimed in any one of Claims 1 to 8, **characterised in that** the distance (az_{B}) between the processing point (B) and the second workpiece (2) is kept constant in soft real time with more than 40 Hz or with more than 50 Hz when a processing point (B) is offset by more than 28 µm in the distance direction (z).

10. Method as claimed in any one of Claims 1 to 9, **characterised in that** a processing point (B) is placed if possible on the wall surface of the first workpiece (1) remote from the laser beam.

11. Method as claimed in any one of Claims 4 to 10, **characterised in that** at least the sensor (C) measuring the distance (az_{P}) of the focal point (TCP) in the distance direction (z) is adjusted in a parallelogram-controlled manner, wherein two mutually parallel parallelogram arms (pz, pzp) are maintained so as to be in parallel with the distance direction.

12. Method as claimed in Claim 11, **characterised in that** a parallelogram control comprises two mutually parallel parallelogram arms (pz', pzp), one of which being maintained in the adjustment direction (z') of the laser beam.

13. Method as claimed in Claim 11 or 12, **characterised in that** the adjustment direction (z') of the laser beam is in parallel with a tangential plane (τ2) extending from a nadir point (P) of the focal point (TCP) and/or forms a predetermined bevel angle at least in a saddle region (8) of the workpieces (1, 2).

14. Method as claimed in any one of Claims 11 to 13, **characterised in that** the adjustment direction (z') of the laser beam is adjusted with an accuracy of ± 2°.

15. Method as claimed in any one of Claims 11 to 14, **characterised in that** the adjustment direction (z') of the laser beam (11) is, during cutting, kept so as to always be perpendicular with respect to a cutting line of an x-y plane having a tangential plane (τ1) extending from the focal point (TCP).

16. Method as claimed in any one of Claims I to 15, **characterised in that** the constant distance (az_{B}) between the processing point (B) and the second workpiece (2) is achieved by controlling an optical element (L1) in the beam path of the laser radiation (11).

17. Device for the robot-controlled cutting of workpieces (1, 2), which are to be joined, by means of laser radiation (11) which is focussed onto a first workpiece (1) whose cut contour (7) can be assembled and joined to a second workpiece (2), in particular for carrying out the method as claimed in any one of Claims 1 to 16, **characterised in that** the device comprises a sensor (C) so that when the device is being used a processing point (B) formed on the first workpiece (1) is at a constant distance (az_{B}) from the second workpiece (2) in a distance direction (z) which is aligned in the same direction during cutting, **in that** the distance direction (z) is adapted to a direction (g) of the assembly of the two workpieces (1, 2), and **in that** a distance (az_{P}) of the focal point (TCP) can be measured by means of the sensor (C) which is aligned in the distance direction (z) during cutting.

18. Device as claimed in Claim 17, **characterised in that** the sensor (C) can be orientated by a guide parallelogram (3, 4, 5, 6), one pair of arms (pz, pzp) of which is orientated in accordance with the distance direction (z) and the other pair of arms (pz', pz'p) of which is orientated in accordance with an adjustment direction (z') of a laser beam (11).

19. Device as claimed in Claim 17 or 18, **characterised in that** a sensor (A) is disposed on an upper parallelogram arm (pz') which is orientated in accordance with an adjustment direction (z') of the laser beam (11), wherein a distance (az') between an element (L1) of processing optics and the first workpiece (1) can be measured by said sensor (A).

20. Device as claimed in any one of Claims 18 or 19, **characterised in that** the upper parallelogram arm (pz') is formed by a rotational axis (D) of a robot hand.

21. Device as claimed in any one of Claims 18 to 20, **characterised in that** a lower parallelogram arm (pz'p) is disposed in parallel with a rotational axis (D) of a robot hand and is attached thereto in an articulated and drivable manner by means of a pair of arms (pz, pzp) which is orientated in parallel with the distance direction (z).

22. Device as claimed in any one of Claims 17 to 21, **characterised in that** an optical element is disposed in the beam path of the laser beam (11), wherein the processing optics (B) can be displaced about a central point by means of said optical element.

23. Device as claimed in Claim 22, **characterised in that** the optical element is a tilting mirror (9) or a displaceable lens (L1), or consists oftwo prisms which can rotate with respect to one another.

24. Device as claimed in any one of Claims 17 to 23, **characterised in that** a distance adjustment region from the focal point (TCP) to a processing point (B) measures ± 1.5 mm in a parallelogram plane (π).

25. Device as claimed in any one of Claims 17 to 25, **characterised in that** a laser having a beam quality of k 0.35 is provided in order to generate the laser radiation (11).

26. Device as claimed in any one of Claims 17 to 25, **characterised in that** a laser measuring beam which is coaxial with the laser beam (11) is provided and has a wavelength range of 500 to 1000 nm.

27. Device as claimed in any one of Claims 18 to 26, **characterised in that** a sensor (C) disposed on the lower parallelogram arm (pz'p) forms part of a measuring device operating with white light.

28. Device as claimed in any one of Claims 17 to 27, **characterised in that** it forms the hand of a robot which is attached and suspended on a linear additional axis.

29. Device as claimed in any one of Claims 17 to 28, **characterised in that** a mirror (9) can be adjusted to different positions of an x-z' plane in terms of a leading or trailing movement of a processing point (B).

## Revendications

1. Procédé pour le découpage commandé par robot de pièces à assembler (1, 2) à l'aide d'un rayonnement laser (11) focalisé sur une première pièce (1) dont le contour découpé (7) est assemblé avec une seconde pièce (2), **caractérisé en ce que** la première pièce (1) est disposée près de la seconde pièce (2) dans une position où le contour (7) est réalisé, **en ce que** lors du découpage du contour (7) de la première pièce (1), l'écartement (az_{P}) entre le point focal (TCP) et la seconde pièce (2) est recherché à plusieurs reprises dans un sens d'écartement (z) qui est le même pendant le découpage et qui est adapté à un sens (g) de l'assemblage des deux pièces (1, 2), et **en ce qu'**un écartement (az_{B}) entre un point d'usinage (B) et la seconde pièce (2) est maintenu constant pendant le découpage.

2. Procédé selon la revendication 1, **caractérisé en ce que** lors du découpage du contour (7) de la première pièce (1) a lieu, en plus de la recherche de l'écartement entre le point focal (TCP) et la seconde pièce (2), une mesure répétée d'un écartement (az') entre un élément (L1) d'un système optique d'usinage et la première pièce (1), et **en ce que** cet écartement est maintenu constant pendant le découpage.

3. Procédé selon la revendication 1 ou 2, **caractérisé en ce que** l'écartement (az_{P}) entre le point focal (TCP) et la seconde pièce (2) est mesuré directement et **en ce que** l'écartement constant (az_{B}) d'un point d'usinage (B) correspondant au point focal (TCP) est réglé au besoin compte tenu de la courbure de la première pièce (1) et/ou de la seconde pièce (2).

4. Procédé selon l'une des revendications 1 à 3, **caractérisé en ce que** l'écartement (az') entre un élément (L1) d'un système optique d'usinage et la première pièce (1) est mesuré avec au moins un capteur sans contact (A) dans un sens de réglage (z') d'un rayon laser et/ou **en ce que** l'écartement (az_{P}) entre le point focal (TCP) et la seconde pièce (2) est mesuré avec au moins un capteur sans contact (C).

5. Procédé selon l'une des revendications 1 à 3, **caractérisé en ce que** les écartements (az_{P}, az') entre le point focal (TCP) et la seconde pièce (2) et/ou entre un élément (L1) d'un système optique d'usinage et la première pièce (1) est mesuré avec un capteur à palpeur ou à rouleau.

6. Procédé selon la revendication 3 ou 4, **caractérisé en ce que** les écartements (az_{P}, az') entre le point focal (TCP) et la seconde pièce (2) et/ou entre un élément (L1) d'un système optique d'usinage et la première pièce (1) sont recherchés avec un appareil de mesure à l'aide d'au moins trois points lumineux ou d'une bande lumineuse qui sont tous disposés dans un seul plan de mesure.

7. Procédé selon la revendication 6, **caractérisé en ce que** le centre situé entre les points lumineux/de la bande lumineuse est aligné aussi bien sur le point focal (TCP) que sur la base (P) de celui-ci projetée dans le sens d'écartement (z).

8. Procédé selon la revendication 6 ou 7, **caractérisé en ce que** les points lumineux et/ou la bande lumineuse sont produits à l'aide d'un rayon de mesure d'un laser de mesure, **en ce que** l'intensité du rayonnement de mesure est supérieure à celle du rayonnement laser (11) et/ou une suppression progressive d'un rayonnement de traitement est réalisée, et **en ce que** la lumière réfléchie par les points lumineux ou par la bande lumineuse est évaluée en ce qui concerne la courbure d'une pièce (1 ou 2) ou des deux pièces (1, 2) avec un objectif de caméra à profondeur de champ.

9. Procédé selon l'une des revendications 1 à 8, **caractérisé en ce que** le maintien de l'écartement constant (az_{B}) entre le point d'usinage (B) et la seconde pièce (2) se fait en temps réel souple à plus de 40 Hz ou à plus de 50 Hz quand il y a un décalage d'un point d'usinage (B) de plus de 28 µm dans le sens d'écartement (z).

10. Procédé selon l'une des revendications 1 à 9, **caractérisé en ce qu'**un point d'usinage (B) est placé autant que possible sur la surface de paroi de la première pièce (1) qui est opposée au rayon laser.

11. Procédé selon l'une des revendications 4 à 10, **caractérisé en ce que** le capteur (C), au moins, qui mesure l'écartement (az_{P}) du point focal (TCP) dans le sens d'écartement (z) est réglé grâce à une commande à parallélogramme, deux bras de parallélogramme parallèles (pz, pzp) étant maintenus parallèles au sens d'écartement.

12. Procédé selon la revendication 11, **caractérisé en ce qu'**une commande à parallélogramme comporte deux bras de parallélogramme parallèles (pz', pzp) dont un qui est maintenu dans le sens de réglage (z') du rayon laser.

13. Procédé selon la revendication 11 ou 12, **caractérisé en ce que** le sens de réglage (z') du rayon laser est parallèle à un plan tangentiel (τ₂) défini dans une base (P) du point focal (TCP) et/ou définit au moins dans une zone d'appui (8) des pièces (1, 2) un angle de chanfrein prédéfini.

14. Procédé selon l'une des revendications 11 à 13, **caractérisé en ce que** le sens de réglage (z') du rayon laser est réglé avec une précision de ±2°.

15. Procédé selon l'une des revendications 11 à 14, **caractérisé en ce que** le sens de réglage (z') du rayon laser (11) lors du découpage est toujours maintenu perpendiculaire à une ligne d'intersection d'un plan x-y avec un plan tangentiel (τ1) défini dans la base (TCP).

16. Procédé selon l'une des revendications 1 à 15, **caractérisé en ce que** l'écartement constant (az_{B}) entre le point d'usinage (B) et la seconde pièce (2) est obtenu à l'aide d'une commande d'un élément optique (L1) dans la trajectoire du rayonnement laser (11).

17. Dispositif pour le découpage commandé par robot de pièces à assembler (1, 2) à l'aide d'un rayonnement laser (11) focalisé sur une première pièce (1) dont le contour découpé (7) est apte à être assemblé avec une seconde pièce (2), en particulier pour la mise en oeuvre du procédé selon l'une des revendications 1 à 16, **caractérisé en ce qu'**il comporte un capteur (C), de sorte que pendant son utilisation, un point d'usinage (B) formé sur la première pièce (1) présente dans un sens d'écartement (z) identique pendant le découpage un écartement constant (az_{B}) par rapport à la seconde pièce (2), **en ce que** le sens d'écartement (z) est adapté à un sens (g) de l'assemblage des deux pièces (1, 2), et **en ce qu'**un écartement (az_{P}) du point focal (TCP) est apte à être mesuré à l'aide du capteur (C) aligné pendant le découpage dans le sens d'écartement (z).

18. Dispositif selon la revendication 17, **caractérisé en ce que** le capteur (C) est apte à être aligné par un parallélogramme articulé (3, 4, 5, 6) dont une paire de bras (pz, pzp) est alignée suivant le sens d'écartement (z) et dont l'autre paire de bras (pz', pz'p) est alignée suivant un sens de réglage (z') d'un rayon laser (11).

19. Dispositif selon la revendication 17 ou 18, **caractérisé en ce qu'**il est prévu sur un bras de parallélogramme supérieur (pz') aligné suivant un sens de réglage (z') du rayon laser (11) un capteur (A) grâce auquel un écartement (az') entre un élément (L1) d'un système optique d'usinage et la première pièce (1) peut être mesuré.

20. Dispositif selon la revendication 18 ou 19, **caractérisé en ce que** le bras de parallélogramme supérieur (pz') est formé par un axe de rotation (D) d'une main de robot.

21. Dispositif selon l'une des revendications 18 à 20, **caractérisé en ce qu'**un bras de parallélogramme inférieur (pz'p) est disposé parallèlement à un axe de rotation (D) d'une main de robot et est fixé à celle-ci de manière articulée et pour pouvoir être entrainé, à l'aide d'une paire de bras (pz, pzp) alignée parallèlement au sens d'écartement (z).

22. Dispositif selon l'une des revendications 17 à 21, **caractérisé en ce qu'**il est prévu dans la trajectoire du rayon laser (11) un élément optique avec lequel le point d'usinage (B) est apte à être déplacé autour d'une position centrale.

23. Dispositif selon la revendication 22, **caractérisé en ce que** l'élément optique est un miroir basculant (9) ou une lentille mobile (L1), ou se compose de deux prismes aptes à tourner l'un par rapport à l'autre.

24. Dispositif selon l'une des revendications 17 à 23, **caractérisé en ce qu'**une plage de réglage d'écartement entre le point focal (TCP) et un point d'usinage (B) est de ±1,5 mm dans un plan de parallélogramme (n).

25. Dispositif selon l'une des revendications 17 à 24, **caractérisé en ce que** pour produire le rayonnement laser (11), on prévoit un laser avec une qualité de rayon k 0,35.

26. Dispositif selon l'une des revendications 17 à 25, **caractérisé en ce qu'**il est prévu un rayon de mesure laser coaxial par rapport au rayon laser (11), avec une plage de longueur d'onde de 500 à 1000 nm.

27. Dispositif selon l'une des revendications 18 à 26, **caractérisé en ce qu'**un capteur (C) disposé sur le bras de parallélogramme inférieur (pz'p) fait partie d'un appareil de mesure qui fonctionne avec une lumière banche.

28. Dispositif selon l'une des revendications 17 à 27, **caractérisé en ce qu'**il forme la main d'un robot qui est fixé en suspension à un axe linéaire supplémentaire.

29. Dispositif selon l'une des revendications 17 à 28, **caractérisé en ce qu'**un miroir (9) est apte à être amené dans différentes positions d'un axe x-z' dans le sens d'une avance ou d'un retard d'un point d'usinage (B).
